# EUROPEAN PATENT SPECIFICATION

(11) **EP 1 742 448 B1**
(45) Date of publication and mention of the grant of the patent: **26.05.2010**
(21) Application number: 06014056.3
(22) Date of filing: 06.07.2006
(51) Int. Cl.: H04M 1/02

(54) **Sliding mobile terminal with damping unit**
Verschiebbares mobiles Endgerät mit Dämpfungseinheit
Terminal mobile coulissant comprenant un dispositif amortisseur

(30) Priority: 07.07.2005 KR 20050061381
(43) Date of publication of application: 10.01.2007
(73) Proprietor: LG Electronics Inc., Youngdungpo-gu Seoul (KR)
(72) Inventor: Park, Sang-Yool, Nowon-Gu, Seoul (KR)
(74) Representative: Urner, Peter

(56) References cited:
- EP-A1- 1 530 345
- EP-A2- 1 075 125
- EP-A2- 1 150 476
- EP-A2- 1 422 911
- EP-B1- 1 075 125
- TW-Y- 260 061
- TW-Y- 261 971
- US-A1- 2001 009 847
- US-A1- 2005 054 393

## Description

### FIELD OF THE INVENTION

The present invention relates to a slide type mobile terminal and, more particularly, to a mobile terminal capable of reducing an impact generated when a body of the mobile terminal is opened and closed.

### BACKGROUND OF THE INVENTION

In general, mobile terminals may be categorized as either flip type mobile terminals or folder type mobile terminals. A flip type mobile terminal comprises a flip rotatably mounted on a main body to open and close an input button region. A folder type mobile terminal comprises a main body having dial buttons and menu buttons, and a folder rotatably mounted on the main body having a liquid crystal display (LCD) attached thereon.

Recently, demands have increased for mobile terminals having large screens for displaying various types of information as images. Accordingly, a slide type mobile terminal including a first body for allowing a user to input information and a second body having a large-size LCD for displaying various image information, wherein the second body is slidably opened and closed over the first body, is increasingly used.

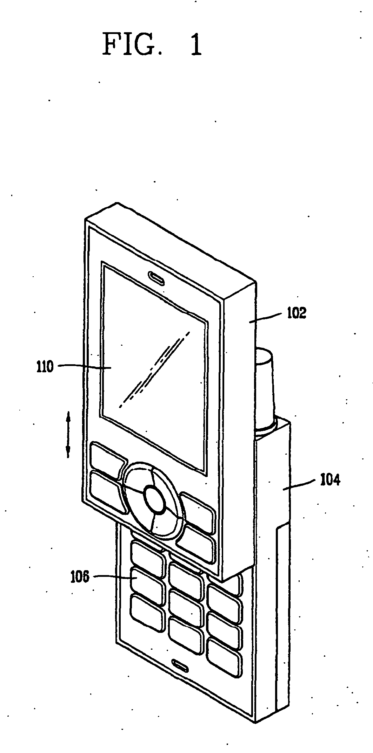

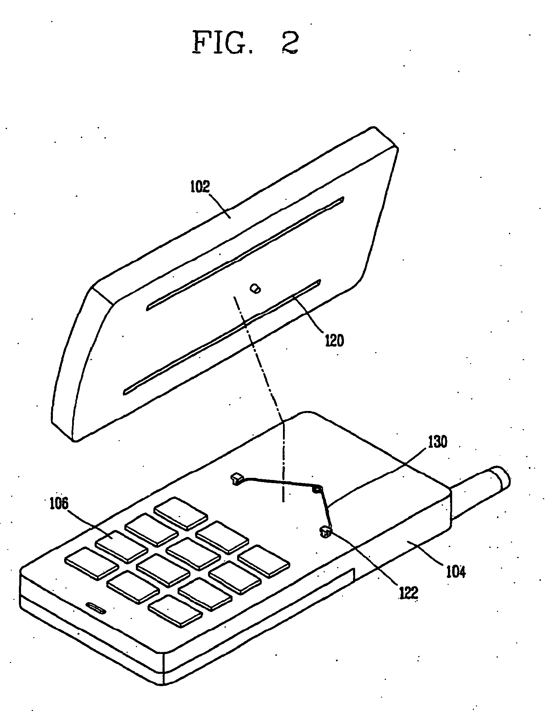

FIG. 1 is a perspective view of a slide type mobile terminal in accordance with a related art. FIG. 2 is an exploded perspective view of the slide type mobile terminal in accordance with the related art. Referring to FIGs. 1 and 2, the related art slide type mobile terminal includes a first body 102, on which a display 110 for displaying various information is mounted and a second body 104, on which the first body 102 is slidably mounted. The second body 104 includes a key pad 106 mounted at its front surface for allowing a user to input information. Slide parts 120 and 122 are installed between the first body 102 and the second body 104, wherein the slide parts 120 and 122 allow the first body 102 to be slidably moved in a longitudinal direction of the second body 104.

The slide parts 120 and 122 include a slide groove 120 formed in a longitudinal direction at two sides of a rear surface of the first body 102, and a slide rail 122 protruded at two sides of a front surface of the second body 104. The slide rails 122 are inserted into the slide grooves 120 to be slidably movable therein.

A spring 130 is operationally installed between the first body 102 and the second body 104 such that when the first body 102 is pushed in an opened or closed direction with respect to the second body 104, the first body 102 is automatically opened or closed by an elastic force of the spring 130. Accordingly, a problem arises with the related art slide type mobile terminal. Specifically, when the first body 102 is opened or closed, because it is automatically opened or closed by the elastic force of the spring, an impact is generated causing damage to the mobile terminal. Moreover, a noise is generated due to the impact.

TW 260061 is concerned with an automatic sliding mechanism that comprises a damping device installed between a sliding rail connected to a sliding part of a slide-type mobile terminal, and a fixed part of the mobile terminal. The damping device includes a damping gear provided on the sliding rail, and a damping gear rail installed at a position on the fixed part in a longitudinal direction to couple with the damping gear. The damping gear having a rotational axis extending in a widthwise direction of the mobile terminal. The damping device further contains a damping ointment coated between the damping gear and the damping gear rail. The damping effect can be varied by adjusting the viscosity of the damping ointment in order to change the sliding speed of the sliding frame after unlocking.

EP 1 150 476 A2 is concerned with a telescopic structure of a telephone apparatus having a body part as a first body and a sleeve-like grip part as a second body which are slidably mounted to each other. An elastic force providing unit is installed between the body part and the sleeve part for providing an elastic force to aid movement between the body part and the grip part when the body part is moved from a retracted position into an extended position. A damping unit is installed between the body part and the grip part and comprises a cogged rack formed in a longitudinal direction at one side of the grip part, a gear wheel operationally coupled to the cogged rack and a damper located in the body part having a damper rotor connected to the gear wheel. Both the gear wheel and the damper rotor having a rotational axis extending in a widthwise direction.

TW 261971 relates to a damping sliding rail and discloses an apparatus having a first body and a second body which are slidably mounted by a damping sliding rail to each other. An elastic member is installed between a fixing stud of the first body and the second body to move the first body relative to the second body when the fixing stud is unlocked. For damping the relative movement between the first and the second body a buffer is provided within the second body and cooperating with a buffer stud provided at the first body. Upon unlocking the fixing stud the first body is moved forward the buffer member by releasing the stored elastic energy of the first elastic member until the buffer stud touches the buffer member. Then, the buffer stud compresses the buffer member to provide a damping force for the first body and to reduce the moving speed of the first body. Thus, the first body is continuously opened apart from the second body under a low and smooth moving speed until a predetermined extension thereof is achieved.

US 2005/0054393 A1 is concerned with movable functional elements for mobile communication devices and discloses a mobile terminal having a first body, second bodies slidably mounted to the first body by guiding leg extensions slidably inserted into corresponding guiding channels and biased by means of tension springs toward a retracted position. A third body is rotatably mounted to the first body and is provided with rollers which are in contact with both of the second bodies so that both second bodies are moved from their retracted positions into an extended position when the third body is rotated from a first position into a second position against the biasing force of the tension springs.

EP 1 530 345 A1 discloses a sliding type mobile communication terminal having a first housing and a second housing adapted to allow the first housing to be opened or closed by means of a sliding movement on the first housing in a longitudinal direction of the first housing. The terminal includes a spring module adapted to provide a sliding force for allowing closing of the second housing within a predetermined range of distance and for providing the sliding force in an opposite direction for allowing opening of the second housing beyond the predetermined range of distance. The spring module comprises a sliding guide having two parallel guide holes, a slider having two parallel guide rods inserted into the guide holes of the sliding guides as well as torsion springs mounted between the sliding guide and the slider to assist the sliding movement.

EP 1 075 125 A2 describes a slide assembly for a communication unit. Herein, a communication unit comprises a display unit and a front cover. The communication unit is provided with a slide cover, which can be moved between a closed and an open position. The slide cover, which is slidably along slide tracks, covers a keypad area. A spring box is mounted in a housing part covered by the front cover. The spring box is filled with a magneto-rheological fluid and provided with cogs, which interacts with a cog provided rack, where said rack is mounted on the slide cover. When the spring box approach magnets mounted on the backside of the slide cover, the magnets increase their viscosity of the fluid inside the spring box. When the motion of the slide cover approached the end position of the opening or closing, the viscosity of the fluid increases inside the spring box. Thus, the motion is slowed down and finally the spring box locks the slide cover into an open position or a closed position.

### SUMMARY OF THE INVENTION

An object of the present invention is to provide a slide-type mobile terminal having improved sliding characteristics when it is opened and closed.

This object is achieved by the mobile terminal of claim 1.

Since the mobile terminal according to the present invention includes an apparatus for reducing an impact when opening and closing the mobile terminal that comprises a damping unit with a longitudinal rack gear, a pinion gear operationally coupled to the rack gear, and a damper fixed at the second body and connected to the pinion gear for slowing rotation of the pinion gear wherein the pinion gear has a rotation axis arranged at the second body orthogonally to a plane of the movement of the bodies, the sliding characteristics can be improved without increasing the thickness of the mobile terminal.

In addition, the second body has a guide slot formed in a sliding direction of the bodies and a hooking rod is movably installed in the sliding direction a the guide slot. Accordingly, the looking mechanism is able to have small thickness, because a hooking rod being inserted at a guide slot could be used as a component of not only a locking mechanism but also a sliding guide mechanism in the present invention.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 is a perspective view of a slide type mobile terminal in accordance with a

### related art.

FIG. 2 is an exploded perspective view of the slide type mobile terminal in accordance with the related art.

FIG. 3 is a perspective view of a mobile terminal in accordance with one embodiment of the present invention.

FIG. 4 is an exploded perspective view of the mobile terminal in accordance with one embodiment of the present invention.

FIG. 5 is a front view of the mobile terminal in accordance with one embodiment of the present invention.

FIG. 6 is a sectional view of a damper in accordance with one embodiment of the present invention.

FIG. 7 is a view showing an operation state of the mobile terminal in accordance with one embodiment of the present invention.

FIG. 8 is a perspective view of a slide module in accordance with another embodiment the present invention.

### DETAILED DESCRIPTION OF THE PREFERRED EMBODIMENTS

The present invention is related to a mobile terminal capable of reducing an impact generated when a body of the mobile terminal is opened and closed.

A mobile terminal in accordance with the present invention will now be described with reference to the accompanying drawings. There can be a plurality of embodiments of the present invention, of which a preferred one will be described.

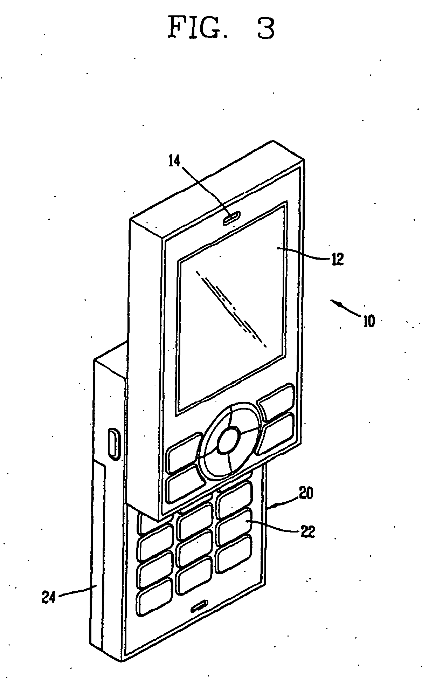

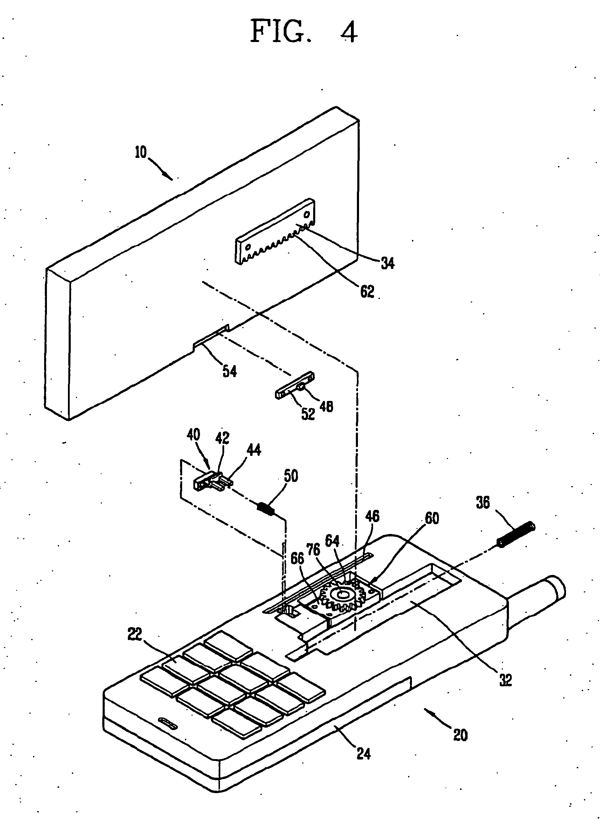

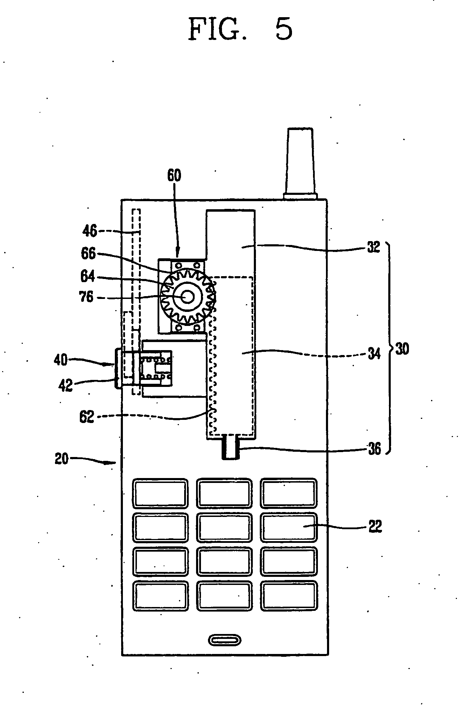

FIG. 3 is a perspective view of a mobile terminal in accordance with one embodiment of the present invention. FIG. 4 is an exploded perspective view of the mobile terminal in accordance with one embodiment of the present invention. FIG. 5 is a front view of the mobile terminal in accordance with one embodiment of the present invention.

Referring to FIG. 3, the mobile terminal in accordance with the present invention includes a first body 10 having a display 12 for displaying various information and a speaker 14 for outputting a sound. A second body 20 is slidably mounted on the first body 10 and has a key pad 22 mounted on its front surface for inputting information by a user. A battery 24 is mounted on a rear surface of the second body 20. Referring to FIGS. 4, 5 and 7, an elastic force providing unit 30 is installed between the first body 10 and the second body 20 and provides an elastic force in a direction that the first body 10 is opened. A locking unit 40 is installed between the first body 10 and the second body 20 for locking the first body 10 when the first body 10 is in a closed state. The mobile terminal further includes a damping unit 60 for performing a damping operation to reduce a generated impact when the first body 10 is slidably moved.

The elastic force providing unit 30 includes a guide groove 32 formed in a longitudinal direction on the front surface of the second body 20, a moving rod 34 fixed at the rear surface of the first body 10 and moved along the guide groove 32, and a biasing member (elastic member) 36 installed between the moving rod 34 and the guide groove 32 for providing an elastic force to the moving rod 34.

When the locking unit 40 is unlocked, the moving rod 34 of the elastic force providing unit 30 is slidably moved along the guide groove 32 by the elastic force of the elastic member 36. Accordingly, the moving rod 34 is moved in a direction that the fixed first body 10 is opened.

The locking unit 40 includes a button 42 disposed to be exposed at the side of the second body 20 and operated when pressed. A push rod 44 connected with the button 42 is linearly moved when the button 42 is pressed. A hooking rod 48 is fixed on the first body 10 and is moved along a guide slot 46 formed on the upper surface of the second body 20. Preferably, the hooking rod 48 is hooked by the push rod 44. A return spring 50 is mounted at the push rod 44 and facilitates returning the button 42 to its original state.

The hooking rod 48 is protruded in a vertical direction at a lower surface of a fixing bracket 52 engaged with a fixing recess 54 formed at the first body 10. One side of the hooking rod 48 is formed at a right angle so as to be caught by the push rod 44. The other side of the hooking rod 48 has a sloped surface such that it may not be caught when the first body 10 is moved in the closing direction.

As for the locking unit 40, when the button 42 is pressed, the push rod 44 is linearly moved to be released from the hooking rod 48, so as to be unlocked. Then, the first body 10 is slidably moved in a direction such that it is automatically opened by the elastic force of the spring 36.

The damping unit 60 includes a rack gear 62 formed in a longitudinal direction at one side of the moving rod 34, a pinion gear 64 operationally coupled to the rack gear 62 and rotated when the moving rod 34 is linearly moved, and a damper 66 mounted at the pinion gear 64 and fixed at the second body 20 to damp in order to slowly rotate the pinion gear 64.

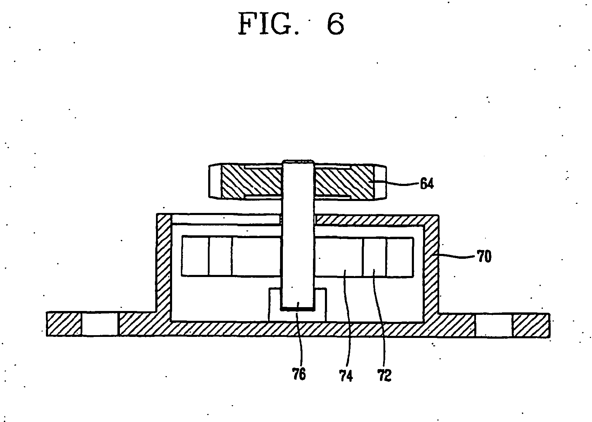

With reference to FIG. 6, the damper 66 includes a damper housing 70 fixed at the second body 20 and filled with a fluid therein. A plurality of rotation blades 74 are rotatably mounted inside the damper housing 70 and include orifices 72 for generating flow resistance while the fluid passes therethrough. The damper 66 further includes a rotational shaft 76 at which the rotation blades 74 and the pinion gear 64 are fixed.

In the damping unit 60, when the pinion gear 64 operationally coupled to the rack gear 62 is rotated, the rotational shaft 76 and the rotation blades 74 are rotated. Accordingly, fluid passes through the orifices 72 formed at the rotation blades 74, thus producing a flow resistance to generate a damping force.

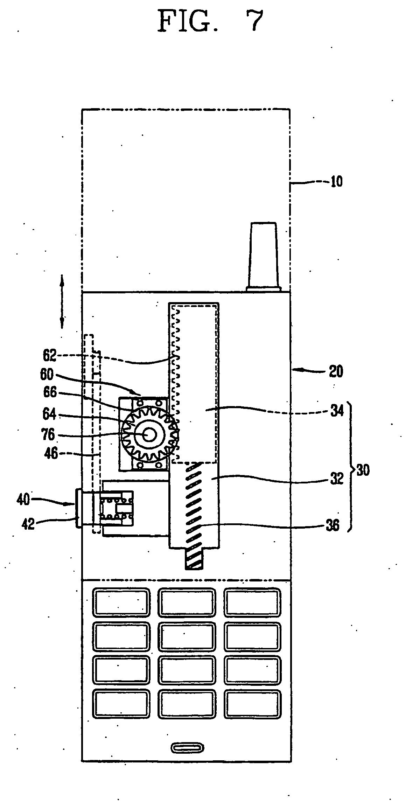

The operation of the mobile terminal constructed as described above will now be explained as follows. FIG. 7 is a view showing an operation state of the mobile terminal in accordance with one embodiment of the present invention.

When the first body 10 is in a closed state, the hooking rod 48 of the locking unit 40 is caught by the push rod 44, maintaining the terminal in the closed state. At this time, the biasing member 36 disposed at the second body 20 is in a compressed state.

While in the closed state, when the user presses the button 42 to use the terminal, the push rod 44 is linearly moved to be released from the hooking rod 48 to unlock the first body 10. Then, the moving rod 34 is linearly moved along the guide groove 32 according to the elastic force of the elastic member 36, and accordingly, the moving rod 34 is slidably moved in a direction that the first body 10 is opened.

At this time, the pinion gear 64 operationally coupled to the rack gear 62 formed at the moving rod 34 is rotated. Preferably, the pinion gear 64 is slowly rotated according to the damping operation of the damping unit 60 mounted at the pinion gear 64. Accordingly, the moving rod 34 is slowly moved to reduce an impact generated when the first body 10 is opened.

Referring to the operation of the damping unit 60, when the pinion gear 64 is rotated, the rotational shaft 76 at which the pinion gear 64 is fixed is rotated. The rotation blades 74 are then rotated according to the rotation of the rotational shaft 76. When the fluid filled in the housing 70 passes through the orifices 72 formed at the rotation blades 74, flow resistance is generated making the pinion gear 64 rotate slowly.

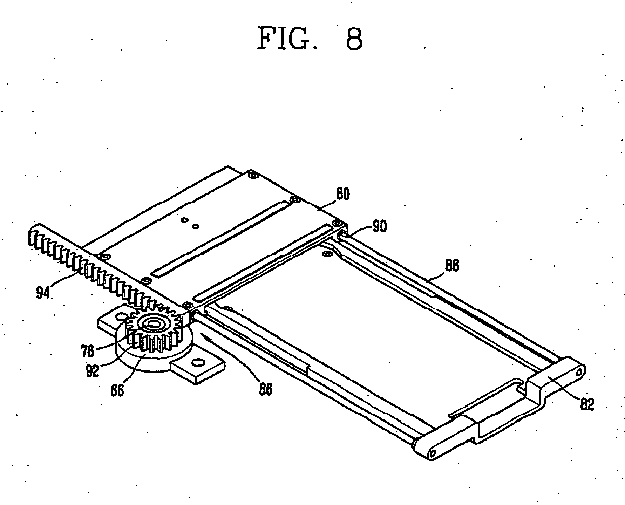

FIG. 8 is a perspective view of a slide module in accordance with one embodiment of the present invention. A slide module in accordance with the present invention includes a first slide member 80 fixed at the first body 10 and a second slide member 82 fixed at the second body 20. Preferably, the first slide member 80 is slidably mounted with respect to the second slide member 82. An elastic force providing unit (not shown) is installed between the first slide member 80 and the second slide member 88 and provides an elastic force when the first slide member 80 is slidably moved in an opened or closed direction. A damping unit 86 is installed between the first and second slide members 80 and 82 for absorbing an impact generated when the first slide member 80 is slidably moved in the opened or closed direction.

A guide bar 88 is mounted in a longitudinal direction at both sides of the second slide member 82. Guide holes 90 are formed at both side surfaces of the first slide member 80. Preferably, the guide bars 88 are inserted in the guide holes 90, wherein the guide holes 90 may be linearly moved around and along the guide bars 88.

One side of the elastic force providing unit is fixed at the first slide member 80 and the other side thereof is fixed at the second slide member 82. The elastic force providing unit pushes the first slide member 80 in the opened or closed direction. Preferably, when the first slide member 80 passes a dead point, the elastic force providing unit provides elastic force to the first slide member 80. Any structure can be applicable thereto.

The damping unit 86 includes a rotational unit installed between the first and second slide members 80 and 82 and rotated when the first slide member 80 is slidably moved. A damper 66 is installed at the rotational unit and generates a damping force when the rotational unit is rotated.

The rotational unit includes a rack gear 94 fixed at the first slide member 80, wherein and the rack gear 94 linearly moves together with the first slide member 80. A pinion gear 92 is operationally coupled to the rack gear 84. The damper 66 is installed at the pinion gear 92.

Preferably, the damper 66 is fixed at the second slide member 82 and the pinion gear 92 is rotatably mounted at the damper 66. Preferably, the damper 66 generates a damping force when the pinion gear 92 is rotated. Preferably, the damper 66 has the same structure as the damper 66 described in FIGS. 4-7 above.

In the mobile terminal in accordance with the present invention, when the first slide member 80 fixed at the first body 10 is slidably moved in the opened or closed direction, the elastic force providing unit provides elastic force to the first slide member 80 so that the first slide member 80 is slidably moved automatically. Preferably, the first slide member 80 is slowly moved according to the damping operation of the damping unit 86. Thus, an impact generated when the slide member 80 is slidably moved is reduced.

In more detail, when the first slide member 80 is slidably moved, the rack gear 94 mounted at the first slide member 80 is linearly moved. Furthermore, the pinion gear 92 operationally coupled to the rack gear 94 is also rotated. Accordingly, the damper 66, wherein the pinion gear 92 is mounted, damps the rotational force of the pinion gear 92. Therefore, the first slide member 80 can be moved slowly.

As so far described, the mobile terminal in accordance with the present invention is advantageous because the damping unit is installed between the first and second bodies to perform the damping operation when the first body is slidably moved, thereby enabling the first body to be slowly opened to reduce an impact.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A mobile terminal comprising:
- a first body (10) and a second body (20) slidably mounted to each other:
- an elastic force providing unit (30) installed between the first body (10) and the second body (20) for providing an elastic force to aid movement between the first body (10) and the second body (20) when the first body (10) and the second body (20) are moved relative to each other:
- a locking unit (40) installed between the first body (10) and the second body (20) for locking the first body (10) to the second body (20) when the first body (10) and the second body (20) are in a closed state with each other; and
- a damping unit (60, 86) installed between the first body (10) and the second body (20) for reducing an impact generated when the first body (10) and the second body (20) are moved relative to each other, the damping unit (60) comprises:
-- a rack gear (62, 94) formed in a longitudinal direction at one side of the first body (10);
-- a pinion gear (64, 92) operationally coupled to the rack gear (62, 94), wherein the pinion gear (64, 92) has a rotation axis arranged at the second body (20) orthogonally to a plane of the movement of the bodies (10, 20); and
-- a damper (66) fixed at the second body (20) and connected to the pinion gear (64) for slowing rotation of the pinion gear (64);
**characterized in that** the second body (20) has a guide slot (46) formed in a moving direction of the bodies (10, 20), and the locking unit (40) comprises:
-- a button (42) installed at the second body (20) and capable of being pressed to be moved;
-- a push rod (44) connected to the button (42), wherein the push rod (44) is linearly moved when the button (42) is pressed; and
-- a hooking rod (48) protruding from the first body (10) orthogonally to the plane of the movement of the bodies (10, 20), wherein the hooking rod (48) is movably installed in the moving direction at the guide slot (46), and is engaged with the push rod (44).

2. The mobile terminal of claim 1, wherein a biasing member (50) is installed at the push rod (44) for returning the button (42) to an original state.

3. The mobile terminal of claim 1, wherein the elastic force providing unit (30) comprises:
- an operation rod (34) fixed at a rear surface of the first body (10) and movably disposed in a guide groove (32) formed at the second body (20) in a longitudinal direction; and
- a biasing member (36) installed between the guide groove (32) and the operation rod (34) for providing an elastic force to the operation rod (34).

4. The mobile terminal of claim 1, wherein the damper (66) comprises:
- a housing (70) fixed at a mounting part formed at the second body (20) and having fluid therein;
- a rotational shaft (76) rotatably disposed at the housing (70) and operationally coupled to the pinion gear (64, 92): and
- rotational blades (74) disposed at an outer circumferential surface of the rotational shaft (76) and having an orifice (72) for generating flow resistance when the fluid passes therethrough.

5. The mobile terminal of claim 4, wherein the rotational blades (74) are disposed at equal intervals at the outer circumferential surface of the rotational shaft (76).

6. The mobile terminal of claim 1, further comprising a slide module to be mounted between the first body (10) and the second body (20), wherein the slide module comprises:
- a first slide member (80) to be mounted at the first body (10); and
- a second slide member (82) with a guide bar (88) to be mounted at the second body (20) in a longitudinal direction thereof.

7. The mobile terminal of claim 6, wherein the elastic force providing unit (30) to be installed between the first slide member (80) and the second slide member (82) for providing an elastic force to aid relative movement between the first body (10) and the second body (20) when the first body (10) and the second body (20) are moved relative to each other.

## Patentansprüche

1. Mobilendgerät, das umfasst:
- einen ersten Körper (10) und einen zweiten Körper (20), die aneinander verschiebbar montiert sind;
- eine Einheit (30) für die Bereitstellung einer elastischen Kraft, die zwischen dem ersten Körper (10) und dem zweiten Körper (20) installiert ist, um eine elastische Kraft bereitzustellen, um eine Bewegung zwischen dem ersten Körper (10) und dem zweiten Körper (20) zu unterstützen, wenn der erste Körper (10) und der zweite Körper (20) relativ zueinander bewegt werden;
- eine Verriegelungseinheit (40), die zwischen dem ersten Körper (10) und dem zweiten Körper (20) installiert ist, um den ersten Körper (10) am zweiten Körper (20) zu verriegeln, wenn der erste Körper (10) und der zweite Körper (20) in einem gegenseitig geschlossenen Zustand sind; und
- eine Dämpfungseinheit (60, 86), die zwischen dem ersten Körper (10) und dem zweiten Körper (20) installiert ist, um einen Stoß zu verringern, der erzeugt wird, wenn der erste Körper (10) und der zweite Körper (20) relativ zueinander bewegt werden, wobei die Dämpfungseinheit (60) umfasst:
-- eine Zahnstange (62, 94), die in einer Längsrichtung auf einer Seite des ersten Körpers (10) ausgebildet ist;
-- ein Ritzel (64, 92), das mit der Zahnstange (62, 94) funktional gekoppelt ist, wobei die Drehachse des Ritzels (64, 92) am zweiten Körper (20) senkrecht zu einer Ebene der Bewegung der Körper (10, 20) angeordnet ist; und
-- einen Dämpfer (66), der am zweiten Körper (20) befestigt ist und mit dem Ritzel (64) verbunden ist, um die Drehung des Ritzels (64) zu verlangsamen;
**dadurch gekennzeichnet, dass** der zweite Körper (20) einen Führungsschlitz (46) besitzt, der in einer Bewegungsrichtung der Körper (10, 20) ausgebildet ist, und dass die Verriegelungseinheit (40) umfasst:
-- eine Taste (42), die am zweiten Körper (20) installiert ist und gedrückt werden kann, um bewegt zu werden;
-- eine Schubstange (44), die mit der Taste (42) verbunden ist, wobei die Schubstange (44) geradlinig bewegt wird, wenn die Taste (42) gedrückt wird; und
-- eine Hakenstange (48), die vom ersten Körper (10) senkrecht zu der Ebene der Bewegung der Körper (10, 20) vorsteht, wobei die Hakenstange (48) in der Bewegungsrichtung bei dem Führungsschlitz (46) beweglich installiert ist und mit der Schubstange (44) in Eingriff ist.

2. Mobilendgerät nach Anspruch 1, wobei an der Schubstange (44) ein Vorbelastungselement (50) installiert ist, um die Taste (42) in einen Ausgangszustand zurückzustellen.

3. Mobilendgerät nach Anspruch 1, wobei die Einheit (30) für die Bereitstellung einer elastischen Kraft umfasst:
- eine Betätigungsstange (34), die an einer hinteren Oberfläche des Körpers (10) befestigt ist und in einer Führungsnut (32), die am zweiten Körper (20) in einer Längsrichtung ausgebildet ist, beweglich angeordnet ist; und
- ein Vorbelastungselement (36), das zwischen der Führungsnut (32) und der Betätigungsstange (34) installiert ist, um für die Betätigungsstange (34) eine elastische Kraft bereitzustellen.

4. Mobilendgerät nach Anspruch 1, wobei der Dämpfer (66) umfasst:
- ein Gehäuse (70), das an einem am zweiten Körper (20) ausgebildeten Montageteil befestigt ist und in dem Fluid vorhanden ist;
- eine Drehwelle (76), die am Gehäuse (70) drehbar angeordnet ist und mit dem Ritzel (64, 92) funktional gekoppelt ist; und
- Drehschaufeln (74), die an einer äußeren Umfangsfläche der Drehwelle (76) angeordnet sind und eine Öffnung (72) besitzen, um einen Strömungswiderstand zu erzeugen, wenn sich das Fluid hindurch bewegt.

5. Mobilendgerät nach Anspruch 4, wobei die Drehschaufeln (74) in gleichen Intervallen an der äußeren Umfangsoberfläche der Drehwelle (76) angeordnet sind.

6. Mobilendgerät nach Anspruch 1, das ferner ein Schiebemodul umfasst, das zwischen dem ersten Körper (10) und dem zweiten Körper (20) zu montieren ist, wobei das Schiebemodul umfasst:
- ein erstes Schiebeelement (80), das am ersten Körper (10) zu montieren ist; und
- ein zweites Schiebeelement (82), das einen Führungsstab (88) besitzt, der am zweiten Körper (20) in dessen Längsrichtung zu montieren ist.

7. Mobilendgerät nach Anspruch 6, wobei die Einheit (30) für die Bereitstellung einer elastischen Kraft zwischen dem ersten Schiebeelement (80) und dem zweiten Schiebeelement (82) zu installieren ist, um eine elastische Kraft bereitzustellen, um eine Relativbewegung zwischen dem ersten Körper (10) und dem zweiten Körper (20) zu unterstützen, wenn der erste Körper (10) und der zweite Körper (20) relativ zueinander bewegt werden.

## Revendications

1. Terminal mobile, comprenant :
- un premier corps (10) et un second corps (20) montés de manière à pouvoir coulisser l'un par rapport à l'autre ;
- un système (30) créant une force élastique, installé entre le premier corps (10) et le second corps (20) pour créer une force élastique afin de contribuer à un mouvement entre le premier corps (10) et le second corps (20) quand le premier corps (10) et le second corps (20) sont amenés à bouger l'un par rapport à l'autre ;
- un système de verrouillage (40) installé entre le premier corps (10) et le second corps (20) pour verrouiller le premier corps (10) par rapport au second corps (20) quand le premier corps (10) et le second corps (20) sont en configuration fermée l'un avec l'autre ; et
- un système d'amortissement (60, 86) installé entre le premier corps (10) et le second corps (20) pour atténuer un choc produit quand le premier corps (10) et le second corps (20) sont amenés à bouger l'un par rapport à l'autre, le système d'amortissement (60) comportant :
un engrenage à crémaillère (62, 94) formé dans une direction longitudinale sur un côté du premier corps (10) ;
un engrenage à pignons (64, 92) coopérant avec l'engrenage à crémaillère (62, 94), l'engrenage à pignons (64, 92) ayant un axe de rotation situé, sur le second corps (20), perpendiculairement à un plan du mouvement des corps (10, 20) ; et
un amortisseur (66) fixé sur le second corps (20) et accouplé avec l'engrenage à pignons (64) pour ralentir la rotation de l'engrenage à pignons (64) ;
**caractérisé en ce que** le second corps (20) comporte une rainure de guidage (46) formée dans une direction de mouvement des corps (10, 20), et le système de verrouillage (40) comporte :
un bouton (42) installé sur le second corps (20) et que l'on peut enfoncer pour l'actionner ;
une tige-poussoir (44) reliée au bouton (42), la tige-poussoir (44) se déplaçant d'une manière linéaire quand on enfonce le bouton (42) ; et
une tige d'accrochage (48) dépassant du premier corps (10) perpendiculairement au plan du mouvement des corps (10, 20), la tige d'accrochage (48) étant installée pour pouvoir se déplacer dans la direction du mouvement dans la rainure de guidage (46) et coopérant avec la tige-poussoir (44).

2. Terminal mobile selon la revendication 1, dans lequel un élément de sollicitation (50) est installé sur la tige-poussoir (44) pour faire revenir le bouton (42) dans une position d'origine.

3. Terminal mobile selon la revendication 2, dans lequel le système (30) créant une force élastique comporte :
- une tige d'actionnement (34) fixée sur une surface arrière du premier corps (10) et disposée dans une gorge de guidage (32) formée dans une direction longitudinale sur le second corps (20) ; et
- un élément de sollicitation (36) installé entre la gorge de guidage (32) et la tige d'actionnement (34) pour fournir une force élastique à la tige d'actionnement (34).

4. Terminal mobile selon la revendication 1, dans lequel l'amortisseur (66) comporte :
- un boîtier (70) fixé sur une partie de montage formée sur le second corps (20) et renfermant un fluide ;
- un axe de rotation (36) disposé de manière à pouvoir tourner sur le boîtier (70) et coopérant avec l'engrenage à pignons (64, 92) ; et
- des pales rotatives (74) disposées sur une surface périphérique extérieure de l'axe de rotation (76) et ayant un orifice (72) pour créer une résistance à l'écoulement quand le fluide passe par celui-ci.

5. Terminal mobile selon la revendication 4, dans lequel les pales rotatives (74) sont disposées à intervalles égaux sur la surface périphérique extérieure de l'axe de rotation (76).

6. Terminal mobile selon la revendication 1, comprenant en outre un module de coulissement à monter entre le premier corps (10) et le second corps (20), le module de coulissement comportant :
- un premier élément de coulissement (80) à monter sur le premier corps (10) ; et
- un second élément de coulissement (82) avec une barre de guidage (88) à monter sur le second corps (20) dans une direction longitudinale de celui-ci.

7. Terminal mobile selon la revendication 6, dans lequel le système créant une force élastique (30) est à installer entre le premier élément de coulissement (80) et le second élément de coulissement (82) pour créer une force élastique afin de contribuer à un mouvement relatif entre le premier corps (10) et le second corps (20) quand le premier corps (10) et le second corps (20) sont amenés à bouger l'un par rapport à l'autre.
